# EUROPEAN PATENT APPLICATION

(11) **EP 1 378 560 A2**
(43) Date of publication of application: **07.01.2004**
(21) Application number: 03012742.7
(22) Date of filing: 04.06.2003
(51) Int. Cl.: C10L 1/30, C10L 1/12, F01N 3/20, F01N 3/035, F23G 7/06

(54) **Aqueous additives in hydrocarbonaceous fuel combustion systems**

(30) Priority: 07.06.2002 US 165462
(71) Applicant: ETHYL CORPORATION, Richmond, Virginia 23219-4304 (US)
(72) Inventor: Roos, Joseph W., Merchanicsville, VA 23116 (US); Cunningham, Lawrence Joseph, Merchanicsville, VA 23116 (US); Guinther, Gregory H., Richmond, VA 23233 (US)
(74) Representative: Schüssler, Andrea, Dr.

(57) **Abstract**

An aqueous additive containing a metal compound is used to improve the operation of combustion exhaust after treatment systems. The additive is introduced into the combustion chamber as part of an emulsion with the fuel or, alternatively, in the emulsion or alone as an aqueous stream introduced into the exhaust or emission path. The metal compound scavenges combustion byproducts in order to protect and make more efficient the after treatment system.

## Description

### Field of the Invention

The present invention relates to an additive for protecting or improving operation of combustion exhaust after treatment systems. The additive contains one or more metal compounds that are soluble in aqueous solutions. The additive can be introduced in an embodiment into a combustion chamber as part of an emulsion or dispersion with the fuel, or it may be injected as the emulsion or dispersion, or alone as an aqueous stream introduced into the combustion exhaust. Therefore, the additive will protect emission control devices (catalysts and traps) from degradation. In another embodiment of the invention, the methods will reduce combustion exhaust emissions.

### Description of the Prior Art

It is well known in the automobile industry, or any industry where hydrocarbonaceous fuels are burned, to reduce tailpipe (or smokestack) emissions by using various strategies. For example, the most common method for reducing emissions from spark ignition engines is by careful control of the air-fuel ratio and ignition timing. Retarding ignition timing from the best efficiency setting reduces HC and NOₓ emissions, while excessive retard of ignition increases the output of CO and HC. Increasing engine speed reduces HC emissions, but NOₓ emissions increase with load. Increasing coolant temperature tends to reduce HC emissions, but this results in an increase in NOₓ emissions.

It is also known that treating the effluent stream from a combustion process by exhaust after treatment can lower emissions. The effluent contains a wide variety of chemical species and compounds, some of which may be converted by a catalyst into other compounds or species. For example, it is known to provide exhaust after treatment including a three-way catalyst and a lean NOₓ trap. Other catalytic and non-catalytic methods are also known.

Catalytic systems are capable of reducing NOₓ as well as oxidizing CO and HC. However, a reducing environment for NOₓ treatment is required which necessitates a richer than chemically correct engine air-fuel ratio. A two-bed converter may be used in which air is injected into the second stage to oxidize CO and HC. While efficient, this procedure results in lower fuel economy.

Single stage, three way catalysts (TWC's) are widely used, but they require extremely precise fuel control to be effective. Only in the close proximity of the stoichiometric ratio is the efficiency high for all three pollutants.

Diesel compression ignition systems raise a different set of challenges for emissions control. Strategies for reducing particulate and HC include optimizing fuel injection and air motion, effective fuel atomization at varying loads, control of timing of fuel injection, minimization of parasitic losses in combustion chambers, low sac volume or valve cover orifice nozzles for direct injection, reducing lubrication oil contributions, and rapid engine warm-up.

In terms of after treatment, it is known that diesel engines generally burn lean and the exhaust will therefore usually contain excess oxygen. Thus, NOₓ reduction with conventional three-way catalysts is not feasible. NOₓ is removed from diesel exhaust by either selective catalytic reduction, the use of lean NOₓ catalysts such as those comprised of zeolitic catalysts or using metals such as iridium, or catalyzed thermal decomposition of NO into O₂ and N₂. It is known to use an aqueous urea solution in selective catalyst reduction ("SCR") systems.

Diesel particulate traps have been developed which employ ceramic or metal filters. Thermal and catalytic regeneration can burn out the material stored. New particulate standards currently under review may necessitate such traps. Fuel composition, including sulfur and aromatic content, and the burning of lubricant can contribute to increased particulate emissions. Catalysts have been developed for diesels, which are very effective in oxidizing the organic portion of the particulate.

Improved fuel economy can be obtained by using a lean-burn gasoline engine, for example, a direct injection gasoline engine, however currently NOₓ cannot be reduced effectively from oxidizing exhaust using a typical three-way catalyst because the high levels of oxygen suppress the necessary reducing reactions. Without a NOₓ adsorber or lean NOₓ trap (LNT), the superior fuel economy of the lean-burn gasoline engine cannot be exploited. The function of the LNT is to scavenge the NOₓ from the exhaust, retaining it for reduction at some later time. The exhaust of both gasoline and diesel engines is net oxidizing and therefore is not conducive to the reducing reactions necessary to remove NOₓ. It is an object of the present invention to improve the storage efficiency and durability of the LNT and to prolong the useful life of the LNT before regeneration is necessary.

It is well known that NOₓ adsorbers are highly vulnerable to deactivation by sulfur (see, for example, M. Guyon et al., *Impact of Sulfur on NO*_{*x*} *Trap Catalyst Activity* *Study of the Regeneration Conditions,* SAE Paper No. 982607 (1998); and P. Eastwood, *Critical Topics in Exhaust Gas Aftertreatment,* Research Studies Press Ltd. (2000) pp.215-218.) and other products (e,g., phosphorous) resulting from fuel combustion and normal lubricant consumption. The US Environmental Protection Agency (EPA) has set forth proposed rules for limiting the sulfur content of highway diesel fuels to a level of 15 parts per million (see 65 FR 35429, June 2, 2000, the complete text of which is incorporated herein by reference). The EPA states "This proposed sulfur standard is based on our assessment of how sulfur-intolerant advanced exhaust emission control technologies will be."

Organometallic manganese compounds, for example methylcyclopentadienyl manganese tricarbonyl (MMT®), available from Ethyl Corporation of Richmond, Virginia, is known for use in gasoline as both an emissions-reducing agent and as an antiknock agent (see, e.g. U.S. Patent 2,818,417). These manganese compounds have been used to lower deposit formation in fuel induction systems (U.S. Patents 5,551,957 and 5,679,116), sparkplugs (U.S. Patent 4,674,447) and in exhaust systems (U.S. Patents 4,175,927; 4,266,946; 4,317,657, and 4,390345. Organometallic iron compounds, such as ferrocene, are known as well for octane enhancement (U.S. Patent 4,139,349). These additives are all added to the hydrocarbon fuel, not to an aqueous phase or aqueous additive.

Diesel-fueled engines produce NOx due to the relatively high flame temperatures reached during combustion. The reduction of NOx production can include the use of catalytic converters, using "clean" fuels, recirculation of exhaust, and engine timing changes. These methods are typically expensive or too complicated to be commercially used.

It is an object of the present invention to provide fuel or lubricant compositions capable of (I) reducing the adverse impact of sulfur, phosphorus, soot, and other exhaust or combustion byproducts, on emissions control technologies, including NOₓ adsorbers and LNTs, and (2) reducing combustion product emissions.

Further, the present invention provides refiners with flexibility in complying with the objective of lowering particulate emissions by allowing refiners to reduce sulfur to a certain level above the regulated level, and yet still obtain the benefits of improved exhaust emissions control technology performance obtained by using fuels containing lower levels of sulfur.

### Summary of the Invention

Accordingly, it is an object of the present invention to overcome the limitations and drawbacks of the foregoing systems and methods to provide a composition and methods for using the composition to protect and improve the operation of combustion exhaust after treatment systems.

In an embodiment, the invention includes an aqueous additive containing a water-soluble metal compound or metal ion source. The additive may be introduced into the combustion chamber as part of an emulsion with the fuel, or it may be injected as the emulsion, or introduced alone as an aqueous stream into the combustion exhaust after the combustion chamber, or introduced into the catalytic converter.

In one embodiment, a hydrocarbonaceous fuel product comprises a hydrocarbonaceous fuel and an aqueous additive that comprises a water-soluble metal compound. The metal compound or metal ion may be an inorganic metal compound or an organometallic compound. The elemental or ionic metal can be one or more of the following group: sodium, potassium, magnesium, calcium, barium, strontium, titanium, cerium, chromium, molybdenum, manganese, iron, rubidium, cobalt, rhodium, nickel, palladium, platinum, copper, and silver compounds, and mixtures thereof. The inorganic metal compound can be selected from the group consisting of fluorides, chlorides, bromides, iodides, oxides, nitrates, sulfates, phosphates, carbonates, hydrides, nitrides, and mixtures thereof. The organometallic compound is selected from the group consisting of alcohols, aldehydes, ketones, esters, anhydrides, sulfonates, phosphonates, chelates, phenates, crown ethers, carboxylic acids, amides, and mixtures thereof. Particularly useful are organometallic compounds containing one or more carbonyl groups, ethers or poly ethers, and other organic ligands able to coordinate with or bond with a metal, metal compound, or metal ion.

Oxygenates are also useful in the fuel product of the present invention including water, biodiesel, alcohols, esters, ethers, ketones, polyols, glymes and mixtures thereof.

In a further embodiment, an aqueous additive to be used in connection with a hydrocarbonaceous fuel product comprises a water-soluble metal compound. As already noted herein, an additive of the present invention may include a metal compound that is an inorganic metal compound or an organometallic compound. The metal is selected from the group of metals noted herein.

In the combustion of fuel or in the exhaust, the additives of the present invention form a stable compound with combustion byproducts, such as sulfur, phosphorus, lead, zinc or soot, which could otherwise poison or adversely impact an after treatment system. The stable compound formed can be readily removed from the exhaust system by, for example, capture within a particulate trap.

In a still further embodiment, an aqueous additive for a hydrocarbonaceous fuel is adapted to be injected into a hydrocarbonaceous combustion exhaust stream. The aqueous additive contains, in an embodiment, a water-soluble metal compound.

In another embodiment of the present invention, the aqueous additive contains a water-dispersed metal compound. The metal compound may be an inorganic metal compound or an organometallic compound. The metal may be selected from the group already noted herein. The inorganic metal compounds and organometallic compounds may also be selected from the groups already disclosed herein. The aqueous additive may further include ammonia, urea, a precursor thereof, or a mixture thereof.

In a still further embodiment, the invention includes a method of enhancing performance durability of a catalytic emissions control system in a hydrocarbonaceous fuel combustion system containing a catalytic device. The catalytic device has a transition metal, noble metal, alkali or alkaline earth metal element, or combinations thereof (catalytic elements). The fuel combustion system produces at least one combustion byproduct. The method includes supplying a fuel comprising an aqueous additive that includes a water-soluble metal compound to the fuel combustion system. The metal compound complexes with at least one combustion byproduct. The metal compound is supplied in an effective amount to complex with at least one fuel combustion byproduct. All of the foregoing reduce the adverse impact of the fuel combustion byproduct on the emissions control system(s). The fuel may be, but is not limited to, a spark-ignition fuel, a compression-ignition fuel, or a combustion chamber fuel. The metal compound may be an inorganic metal compound or organometallic compound as described herein.

In a still further embodiment, the invention includes a method of enhancing performance durability of catalytic emissions control systems for after treatment of an exhaust stream from a hydrocarbonaceous fuel combustion system. The fuel combustion system contains a catalytic device having a transition metal, noble metal, alkali or alkaline earth metal element, or combinations thereof (catalytic elements). The combustion system produces at least one byproduct. The method comprises injecting an aqueous additive comprising a metal compound into the exhaust stream. The metal compound complexes with at least one combustion byproduct. The metal compound is supplied in an effective amount to complex with at least one fuel combustion fuel byproduct, whereby the impact of the byproduct on the emissions control system is reduced. The metal compound may be an inorganic or organometallic compound. The additive may contain ammonia, urea, precursors thereof, or a mixture thereof.

In another embodiment, a catalytic emissions control system for the after treatment of a combustion process exhaust stream comprises an exhaust passageway for the passage of an exhaust stream containing exhaust byproducts from the combustion of a hydrocarbonaceous fuel. The system also includes at least one catalytic material having catalytic activity, with a catalytic material being located within the exhaust passageway and contacting the exhaust stream. The exhaust stream contains a water-soluble metal compound which complexes with at least one of the exhaust byproducts and reduces the impact of the byproduct on the catalytic material, wherein the fuel comprises an aqueous additive that includes the water-soluble metal compound.

In another embodiment, a catalytic emissions control system for the after treatment of a combustion process exhaust stream comprises an exhaust passage way for the passage of an exhaust stream containing exhaust byproducts from the combustion of a hydrocarbonaceous fuel. The system also includes at least one catalytic material having catalytic activity, and the catalytic material is located within the exhaust passage way and contacts the exhaust stream. The exhaust stream has an aqueous additive streamed into it, the additive comprising a water-soluble metal compound which complexes with at least one of the exhaust byproducts and reduces the impact of the byproduct upon the catalytic material.

### Detailed Description

The additives of the present invention are inorganic or organometallic compounds metal compounds soluble or dispersable in aqueous solutions. At least one of the metals in the additive promotes the oxidation of carbon particulate matter. This would include additives containing sodium, potassium, magnesium, calcium, barium, strontium, titanium, cerium, chromium, molybdenum, manganese, iron, rubidium, cobalt, rhodium, nickel, palladium, platinum, copper, and silver. Upon introduction into the exhaust stream, the metal(s) is/are released and are collected at least in part in a particulate filter. The metal or metals come into contact with the carbon fraction of the particulate, accelerate the carbon oxidation reactions, and aid in particulate trap regeneration. The exhaust system may contain other aftertreatment systems in addition to the particulate filter.

The hydrocarbonaceous fuel combustion systems that may benefit from the present invention include all internal combustion engines that burn, for example, gasoline, diesel, or similar type fuels. It also refers to coal-burning power plants, wood-burning cogeneration plants, waste burners, burner operations, or any other combustion of a hydrocarbonaceous fuel product. By "combustion chamber" herein is meant any and all devices, machines, engines, incinerators, stationary burners and the like which can combust or in which can be combusted a hydrocarbonaceous fuel. Thus, by "hydrocarbonaceous fuel" herein is meant one or more fuels selected from the group consisting of gasoline, bitumen, crude oil, residual fuel oil, bunker oils, middle distillate fuel, diesel fuel, biodiesel, biodiesel-derived fuel, synthetic diesel fuel, coal, coal slurry, methanol, ethanol, methane, home heating oil, lignocellulosics, wood chips, wood pulp, sawdust, leaves, bushes, lawn clippings, paper, urban waste, industrial waste, and farm waste, and mixtures thereof.

Conventional combustion systems will typically include some degree of emission control. In all cases of combustion, the emission treatment may include a catalytic system to reduce harmful emissions. Of course, other emission treatment systems are well known.

Unfortunately, such emission systems have a tendency to lose their effectiveness over time due to poisoning or degradation of emission treatment system components.

The present invention contemplates providing a metal compound to an aqueous solution as an additive to a fuel or lubricant composition or, alternatively, directly into the exhaust stream or combustion zone resulting from the combustion process, whereby the useful life of the emission treatment system components will be significantly improved.

Preferred metals herein include elemental and ionic sodium, potassium, magnesium, calcium, barium, strontium, titanium, cerium, chromium, molybdenum, manganese, iron, rubidium, cobalt, rhodium, nickel, palladium, platinum, copper and silver, precursors thereof, and mixtures. These metal compounds may be either inorganic or organic. Also effective in the present invention is the generation, liberation or production *in situ* of one or more of these metals or metal ions.

Preferred inorganic metallic compounds in an embodiment of the present invention can include by example and without limitation methylcyclopentadienyl manganese tricarbonyl (MMT® available from Ethyl Corporation), sodium chloride, potassium chloride, titanium dioxide, copper oxide, sodium nitrates, sodium nitrites, and copper and silver halides. Metallic sulfates and metallic phosphates will be operative in the present invention and may, in certain fuels and combustion applications, not present unacceptable additional sulfur and phosphorus combustion byproducts.

Preferred organometallic compounds in an embodiment of the present invention include alcohols, aldehydes, ketones, esters, anhydrides, carboxylic acids and amides. In each of the foregoing alternatives, the metal compound is soluble in water. By "soluble in water" or "water dispersed" herein is meant any amount of metal compound dissolved in, dissolvable in, or dispersed in any volume of water. No limitation is known with regard to the solubility or dispersability of the metal compounds effective in the present invention.

In another embodiment, the metal compound is delivered to the combustion chamber or to the combustion exhaust stream through the organic phase of a fuel emulsion or hydrocarbonaceous fuel.

In an embodiment, when formulating aqueous additives of the present invention, the metal compounds are employed in amounts sufficient to reduce the impact of poisons, e.g., sulfur, lead, soot and phosphorus, on the emissions control systems. Still further, the metallic compounds are employed in amounts sufficient to reduce combustion emissions all together. Generally speaking, the aqueous additive of the invention will contain an amount of the metal compound, ion or precursor thereof sufficient to provide from about 0.001 grams to about 2.0 grams of metal or metal compound per liter of fuel (in the case of a liquid fuel product), and preferably from about 0.01 grams to about 1.0 grams of metal or metal compound per liter of fuel.

In another embodiment, hydrocarbonaceous fuel can include methane gas that is used, for example, alone or in conjunction with other fuels in an internal combustion engine. Ethanol, methanol and other alcohols, as well as esters, ethers, ketones, polyols, glymes and other oxygenates are also useful herein as hydrocarbonaceous fuels to which the water-soluble metal compounds can be added for beneficial emission and catalysis results.

In yet another embodiment, farm waste including fodder, silage, field and crop residue, animal excrement, and other bioproducts can be utilized as a fuel herein with or without the addition of process aids. To such waste can be added the water-soluble metal compounds of the present invention.

With respect to other types of solid hydrocarbonaceous fuel products such as coal, lignocellulosics (including wood chips, sawdust, leaves, bushes, lawn clippings, and paper), and combustible urban, industrial or farm waste, the aqueous additive will contain an amount of the metal compound sufficient to provide about 0.001 grams to about 10.0 grams of metal per 100 grams of the solid fuel, preferably about 0.01 to about 1.0 grams of metal per 100 grams of the solid fuel.

When the metal is added to the lubrication systems of combustion systems as a means of delivering the metal to the combustion system, the metal concentration may be increased to provide the above amounts of metal in the combustion chamber. In this embodiment, it is known that all internal combustion engines burn some lubricant thereby adding to the combustion byproducts any material carried into the combustion chamber by the lubricant.

While not being bound by the following theory, it is postulated that the sulfur or phosphorus or other possible combustion byproducts in the emission system react with the metal or metal ion in the present invention to form a metal sulfate or phosphate (MSO₄ and MPO₄) which is stable in the temperature range of 200-650° C. Surprisingly, metal sulfates such as, for instance, MnSO₄, do not bind to active sites on the catalyst of automotive emission systems, whereas free sulfur often does, thereby poisoning the catalyst.

When the emissions system contains a component which is poisionable by combustion byproducts (such as sulfur, phosphorus, lead, zinc or soot), for instance, a barium-containing lean NOₓ trap, the present invention provides novel compositions and methods for providing a substance which competes with the active site (e.g., barium) in the lean-burning exhaust. As long as the metal of the scavenging agent will compete with the metal of the catalyst system for complexing with the potential emissions system poisons (e.g., sulfur) the metals may be suitable for use as scavenging agents. The ability of the metal scavenging agent to compete with the metals of the catalyst for complexing with the catalyst poisons can be determined by monitoring catalyst durability. Further, the metal scavengers of the present invention can reduce the detrimental impact of other poisons such as sulfur, phosphorous, lead, zinc, or soot on emissions control systems of the lean burn combustion systems in one embodiment of the present invention.

The addition of some metal compounds in the combustion of fuel products is known generally in the context of fuel-soluble additives. In the present invention, the metal additive can be water-soluble or dispersable and delivered through an aqueous additive to obtain comparable emissions aftertreatment benefits. Yet, the use of the aqueous additive is beneficial in its ease of handling, expense, ease of preparation, etc. and can be used herein in addition to fuel soluble additives.

In addition to the beneficial compositions of matter noted herein, there are corollary methods of using the described aqueous additive to enhance the performance and durability of emissions and aftertreatment systems. The instance of incorporating the additive to the fuel to form an emulsion (gasoline, diesel, etc.), dispersion, suspension, or slurry (coal, etc.) can have positive benefits on the emissions from the combustion. The additive may also be injected alone or with liquid fuel directly into the exhaust stream of a combustion process.

### Example 1

1. The additives are inorganic or organometallic compounds metal compounds soluble in aqueous solutions. At least one of the metals in the additive promotes the oxidation of carbon particulate matter. This would include additives containing elemental or ionic sodium, potassium, magnesium, calcium, barium, strontium, titanium, cerium, chromium, molybdenum, manganese, iron, rubidium, cobalt, rhodium, nickel, palladium, platinum, copper and silver. Upon introduction into the exhaust stream, the metal(s) is (are) released and collected, at least in part, in a particulate filter. The metals come into contact with the carbon fraction of the particulate, accelerate the carbon oxidation reactions, and aid in particulate trap regeneration. The exhaust system may contain other aftertreatment systems in addition to the particulate filter.

### Example 2

In one application the exhaust system contains at least a particulate trap upstream of a selective catalytic reduction (SCR) system, which is designed to aid in the reduction of exhaust NOₓ emissions. The SCR utilizes in one embodiment urea as a reductant. Urea is typically a solid but to ease handling an aqueous solution, preferably at a concentration of about 32.5% can be used. This solution can form a eutectic with a low crystallization point (-110° C). In case of crystallization, the eutectic mixture provides an aqueous and solid phase of equal composition. The additive is added to this solution.

The urea/additive aqueous solution is, in one embodiment, injected into the exhaust stream after the exhaust stream has left the combustion chamber. The water is vaporized and the urea decomposes to form ammonia (NH₃), which reacts with oxides of nitrogen over a catalyst to form N₂ and H₂O. Upon evaporation of the water, the metal from the additive is released and collected with the combustion particulate matter in the particulate trap. The metal increases particulate oxidation, thereby promoting trap regeneration.

By introducing the particulate trap regeneration additive with the reductant in this system, its presence in the particulate trap is assured. A separate additive-dosing tank on the vehicle, as used in some cases (Peugeot) is not needed. Enhanced regeneration does not rely on additive being present in fuel.

### Example 3

In the application described in Example 2, the metal additive used is one that will form stable metal phosphates. A portion of the metal released in the exhaust interacts to form stable metal phosphates as solid particulate and prevent phosphorus deposition on exhaust catalyst. The use of these additives will protect the SCR catalyst from deterioration due to phosphorus poisoning.

### Example 4

Two of the primary factors that determine the extent to which the reaction between NH₃ and oxides of nitrogen proceed to completion is the surface areas of catalyst available to catalyst the reaction and the amount of time the reactants and catalyst spend together an optimal temperatures for reaction.

In the application described in Example 2, the metal additive may be chosen such that at least one of the metals catalyzes the reaction between NH₃ and NO. The metal additive will form very small metal cluster in the exhaust and possess high specific surface area. The high surface area available on the nano sized catalytic sites provided by the metal additive will provide additional activity for NO conversion. Also, the reactants will move with the catalyst through the exhaust stream, increasing residence time in contact with the catalyst. The presence of the catalyst in the exhaust will also help insure that catalyst and reactants are together at optimal conversion temperatures for oxides of nitrogen. The ability to have catalyst present at the time optimal reaction temperatures are reached is advantageous over relying on a catalyst fixed in the exhaust system. This catalyst would be amenable to wide swings in exhaust temperatures occur during transient engine operation.

### Example 5

A fuel water emulsion in which the aqueous phase additionally contains a water-soluble additive containing 0.05 weight percent of a divalent Mn compound is used in a diesel engine. The diesel engine operates under fuel lean conditions. Upon combustion of the fuel, the water-soluble manganese additive decomposes to form primarily manganese oxides. Sulfur oxides in the exhaust gas interact with the manganese oxides to form stable manganese sulfate, scavenging the SO₂ and SO₃ from the exhaust as solid particles are captured in the particulate trap or emitted from the exhaust.

### Example 6

A fuel water emulsion in which the aqueous phase additionally contains a water-soluble additive containing 0.05 weight percent of a manganese compound is used in a diesel engine. The diesel engine operates under fuel lean conditions. Upon combustion of the fuel, the water-soluble manganese additive decomposes to form primarily manganese oxides. Sulfur oxides in the exhaust gas interact with the manganese oxide to form stable manganese sulfate scavenging the SO₂ and SO₃ from the exhaust. The manganese oxides effectively tie up the phosphorus in a stable compound and reduce the phosphorus deposition on catalyst systems in the exhaust. In addition the water-soluble manganese compound will aid in the regeneration of a particulate trap if one is present.

Embodiments of the present invention include a method of enhancing performance durability of a catalytically-based emissions control system in a lean fuel combustion system containing a catalytic device having a transition metal, alkali or alkaline earth metal element, or combinations thereof (catalytic elements), said combustion system producing at least one byproduct, comprising supplying a fuel to said lean fuel combustion system, said combustion system being provided with a scavenger, said scavenger complexing with at least one combustion byproduct, said scavenger being supplied in an effective amount to complex with the at least one fuel combustion byproduct, whereby the impact of said fuel combustion byproduct on said emissions control system is reduced.

It is to be understood that the reactants and components referred to by chemical name anywhere in the specification or claims hereof, whether referred to in the singular or plural, are identified as they exist prior to coming into contact with another substance referred to by chemical name or chemical type (e.g., base fuel, solvent, etc.). It matters not what chemical changes, transformations and/or reactions, if any, take place in the resulting mixture or solution or reaction medium as such changes, transformations and/or reactions are the natural result of bringing the specified reactants and/or components together under the conditions called for pursuant to this disclosure. Thus the reactants and components are identified as ingredients to be brought together either in performing a desired chemical reaction (such as formation of the organometallic compound) or in forming a desired composition (such as an additive concentrate or additized fuel blend). It will also be recognized that the additive components can be added or blended into or with the base fuels individually per se and/or as components used in forming preformed additive combinations and/or sub-combinations. Accordingly, even though the claims hereinafter may refer to substances, components and/or ingredients in the present tense ("comprises", "is", etc.), the reference is to the substance, components or ingredient as it existed at the time just before it was first blended or mixed with one or more other substances, components and/or ingredients in accordance with the present disclosure. The fact that the substance, components or ingredient may have lost its original identity through a chemical reaction or transformation during the course of such blending or mixing operations is thus wholly immaterial for an accurate understanding and appreciation of this disclosure and the claims thereof.

At numerous places throughout this specification, reference has been made to a number of U.S. Patents and published foreign patent applications. All such cited documents are expressly incorporated in full into this disclosure as if fully set forth herein.

This invention is susceptible to considerable variation in its practice. Therefore the foregoing description is not intended to limit, and should not be construed as limiting, the invention to the particular exemplifications presented hereinabove. Rather, what is intended to be covered is as set forth in the ensuing claims and the equivalents thereof permitted as a matter of law.

Patentee does not intend to dedicate any disclosed embodiments to the public, and to the extent any disclosed modifications or alterations may not literally fall within the scope of the claims, they are considered to be part of the invention under the doctrine of equivalents.

## Claims

1. A hydrocarbonaceous fuel product comprising:
a) hydrocarbonaceous fuel, and
b) an aqueous additive that comprises a metal compound.

2. The fuel product of claim 1, wherein the fuel product is an emulsion.

3. The fuel product of claim 1, wherein the aqueous additive is an emulsion.

4. The fuel product of claim 1, wherein the metal compound is soluble in the fuel product.

5. The fuel product of claim 1, wherein the metal compound is dispersed in the fuel product.

6. The fuel product of claim 1, wherein the metal compound is soluble in the aqueous additive.

7. The fuel product of claim 1, wherein the metal compound is dispersed in the aqueous additive.

8. The fuel product of claim 1, wherein the hydrocarbonaceous fuel is selected from gasoline, bitumen, crude oil, residual fuel oil, bunker oils, middle distillate fuel, diesel fuel, biodiesel, biodiesel-derived fuel, synthetic diesel fuel, coal, coal slurry, methanol, ethanol, methane, home heating oil, lignocellulosics, wood chips, wood pulp, sawdust, leaves, bushes, lawn clippings, paper, urban waste, industrial waste, and farm waste, and mixtures thereof.

9. The fuel product described in claim 1, wherein the metal compound is an inorganic metal compound.

10. The fuel product described in claim 1, wherein the metal is selected from the group consisting of sodium, potassium, magnesium, calcium, barium, strontium, titanium, cerium, chromium, molybdenum, manganese, iron, rubidium, cobalt, rhodium, nickel, palladium, platinum, copper, silver, and mixtures thereof.

11. The fuel product described in claim 9, wherein the inorganic metal compound is selected from the group consisting of fluorides, chlorides, bromides, iodides, oxides, nitrates, sulfates, phosphates, nitrides, hydrides, carbonates, and mixtures thereof.

12. The fuel product described in claim 1, wherein the metal compound is an organometallic compound.

13. The fuel product described in claim 6, wherein the metal is selected from the group consisting of sodium, potassium, magnesium, calcium, barium, strontium, titanium, cerium, chromium, molybdenum, manganese, iron, rubidium, cobalt, rhodium, nickel, palladium, platinum, copper, silver, and mixtures thereof.

14. The fuel product described in claim 12, wherein the organometallic compound is selected from the group consisting of alcohols, aldehydes, ketones, esters, anhydrides, sulfonates, phosphonates, chelates, phenates, crown ethers, carboxylic acids, amides, and mixtures thereof.

15. The fuel product described in claim 1, wherein the aqueous additive is comprised of about 0.001 to about 10.0 percent by weight of the metal compound.

16. The fuel product described in claim 1, wherein the aqueous additive comprises about 0.001 to about 10.0 percent by weight of the hydrocarbonaceous fuel product.

17. The fuel product described in claim 1, wherein the hydrocarbonaceous fuel product is a liquid fuel for use in an internal combustion engine.

18. The fuel product of claim 1, further comprising at least one oxygenate selected from the group consisting of water, biodiesel, alcohols, esters, ethers, ketones, polyols, glymes, and mixtures thereof.

19. The fuel product of claim 1, wherein the aqueous additive comprises manganese methylcyclopentadienyl tricarbonyl.

20. The fuel product of claim 1, further comprising at least one material selected from the group consisting of urea and ammonia.

21. An aqueous additive used with a hydrocarbonaceous fuel product, wherein the additive comprises a water-soluble metal compound.

22. The aqueous additive as described in claim 21, wherein the hydrocarbonaceous fuel product is a liquid fuel for use in a combustion chamber.

23. An aqueous additive adapted to be injected into a hydrocarbonaceous combustion exhaust stream, the additive comprising a water-soluble metal compound.

24. The aqueous additive as described in claim 21 or 23, wherein the metal compound is an inorganic metal compound.

25. The aqueous additive as described in claim 21 or 23, wherein the metal is selected from the group consisting of sodium, potassium, magnesium, calcium, barium, strontium, titanium, cerium, chromium, molybdenum, manganese, iron, rubidium, cobalt, rhodium, nickel, palladium, platinum, copper, silver, and mixtures thereof.

26. The aqueous additive as described in claim 24, wherein the inorganic metal compound is selected from the group consisting of fluorides, chlorides, bromides, iodides, oxides, nitrates, sulfates, phosphates, hydrides, carbonates, nitrides, and mixtures thereof.

27. The aqueous additive as described in claim 21 or 23, wherein the metal compound is an organometallic compound.

28. The aqueous additive as described in claim 27, wherein the metal is selected from the group consisting of sodium, potassium, magnesium, calcium, barium, strontium, titanium, cerium, chromium, molybdenum, manganese, iron, rubidium, cobalt, rhodium, nickel, palladium, platinum, copper, silver, and mixtures thereof.

29. The aqueous additive as described in claim 27, wherein the organometallic compound is selected from the group consisting of alcohols, aldehydes, ketones, esters, anhydrides, sulfonates, phosphonates, chelates, phenates, crown ethers, carboxylic acids, amides, and mixtures thereof.

30. The aqueous additive as described in claim 21 or 23, wherein the aqueous additive is comprised of about 0.001 to about 10.0 percent by weight of the metal compound.

31. The aqueous additive as described in claim 21 or 23, wherein the additive is injected into the exhaust stream at a rate of about 0.001 to about 10.0 percent by weight of the hydrocarbonaceous source.

32. The aqueous additive as described in claim 23, wherein the additive further comprises at least one material selected from the group consisting of ammonia and urea.

33. A method of enhancing performance durability of a catalytic emissions control system in a hydrocarbonaceous fuel combustion system comprising a catalytic device having a transition metal, noble metal, alkali or alkaline earth metal element, or combinations thereof, said combustion system producing at least one combustion byproduct, said method comprising:
supplying a hydrocarbonaceous fuel comprising an aqueous additive that includes a soluble metal compound to a fuel combustion system,
combusting said fuel in said combustion system to produce at least one byproduct, combustion complexing said metal compound with at least one combustion byproduct,
said metal compound being supplied in an effective amount to complex with the at least one fuel combustion byproduct,
whereby the impact of said fuel combustion by product on said emissions control system is reduced.

34. The method of claim 33, wherein the said fuel comprises a spark-ignition fuel.

35. The method of claim 33, wherein said fuel comprises a compression-ignition fuel.

36. The method of claim 33, wherein said fuel comprises a combustion chamber fuel.

37. The method of claim 33, wherein the aquous additive comprises about 0.001 to about 10.0 percent by weight of the hydrocarboneous fuel.

38. A method of enhancing performance durability of a catalytic emissions control system for after treatment of an exhaust stream from a hydrocarbonaceous fuel combustion system containing a catalytic device having a transition metal, noble metal, alkali or alkaline earth metal element, or combinations thereof, said combustion system producing at least one byproduct, comprising:
supplying a hydrocarbonaceous fuel to a fuel combustion system, combusting said fuel in said system to produce at least one combustion byproduct in the exhaust stream,
injecting an aqueous additive comprising a metal compound into the exhaust stream, complexing said metal compound with at least one combustion byproduct,
said metal compound being supplied in an effective amount to complex with the at least one fuel combustion byproduct,
whereby performance durability of the catalytic device is enhanced.

39. The method of claim 33 or 38, wherein the metal compound is an inorganic metal compound.

40. The method of claim 33 or 38, wherein the metal is selected from the group consisting of sodium, potassium, magnesium, calcium, barium, strontium, titanium, cerium, chromium, molybdenum, manganese, iron, rubidium, cobalt, rhodium, nickel, palladium, platinum, copper, silver, and mixtures thereof.

41. The method of claim 39, wherein the inorganic metal compound is selected from the group consisting of fluorides, chlorides, bromides, iodides, oxides, nitrates, sulfates, phosphates, hydrides, carbonates, nitrides, and mixtures thereof.

42. The method of claim 33 or 38, wherein the metal compound is an organometallic compound.

43. The method of claim 42, wherein the metal is selected from the group consisting of sodium, potassium, magnesium, calcium, barium, strontium, titanium, cerium, chromium, molybdenum, manganese, iron, rubidium, cobalt, rhodium, nickel, palladium, platinum, copper, silver, and mixtures thereof.

44. The method of claim 42, wherein the organometallic compound is selected from the group consisting of alcohols, aldehydes, ketones, esters, anhydrides, carboxylic acids, sulfonates, phosphonates, chelates, phenates, crown ethers, amides, and mixtures thereof.

45. The method of claim 33 or 38, wherein the aqueous additive is comprised of about 0.001 to about 10.0 percent by weight of the metal compound.

46. The method of claim 38, wherein the additive further comprises at least one material selected from the group consisting of ammonia and urea.

47. A catalytic emissions control system for the after treatment of a combustion process exhaust stream, comprising:
an exhaust passageway for the passage of an exhaust stream containing exhaust byproducts from the combustion of a hydrocarbonaceous fuel,
at least one catalytic material having catalytic activity, said catalytic material being located within the exhaust passageway and contacting the exhaust stream,
wherein the exhaust stream contains a water-soluble metal compound which complexes with at least one of the exhaust byproducts and reduces the impact of the byproduct upon the catalytic material, and
wherein said fuel comprises an aqueous additive that includes the water-soluble metal compound.

48. A catalytic emissions control system for the after treatment of a combustion process exhaust stream, comprising:
an exhaust passageway for the passage of an exhaust stream containing exhaust byproducts from the combustion of a hydrocarbonaceous fuel,
at least one catalytic material having catalytic activity, said catalytic material being located within the exhaust passageway and contacting the exhaust stream,
wherein the exhaust stream has an aqueous additive introduced into it, the additive comprising a water-soluble metal compound which complexes with at least one of the exhaust byproducts and reduces the impact of the exhaust upon the catalytic material.

49. A system as described in claim 48, wherein the additive further comprises at least one material selected from the group consisting of ammonia, urea, precursors thereof, or a mixture thereof.

50. The system described in claim 47 or 48, wherein at least one of the byproducts contains sulfur.

51. The system described in claim 47 or 48, wherein at least one of the byproducts contains phosphorous.

52. The system described in claim 47 or 48, wherein at least one of the byproducts contains a material selected from the group consisting of lead compounds, zinc compounds, and soot.

53. A method for protecting the catalyst in a catalytic converter which receives combustion byproducts from the combustion of hydrocarbonaceous fuel, said method comprising adding to the fuel before or during combustion an aqueous additive containing a water-soluble metal compound, whereby the catalyst is protected relative to the catalyst in a catalytic converter which receives combustion byproducts without said aqueous additive.

54. A method for emission reduction of one or more materials selected from sulfur compounds, phosphorus compounds, and soot produced by the combustion of hydrocarbonaceous fuel in a combustion chamber, said method comprising adding to the fuel before or during combustion an aqueous additive containing a water-soluble metal compound, whereby the metal of said metal compound reacts with at least one material selected from the group consisting of sulfur, phosphorus, lead, zinc and soot to form a particulate which is captured in a particulate trap.

55. A method for the after-treatment of combustion products resulting from the combustion of hydrocarbonaceous materials, said method comprising adding to the fuel before or during combustion an aqueous additive containing a water-soluble metal compound, whereby the metal of said metal compound reacts with at least one material selected from the group consisting of sulfur, phosphorus, lead, zinc and soot to form a particulate which is captured in a particulate trap.

56. A combustion device comprising a combustion chamber, a combustion byproduct exhaust passageway, a catalytic converter, particulate trap, and a means for introducing an aqueous additive.

57. A method conducted in a combustion chamber for reducing the amount of one or more materials selected from the group consisting of sulfur compounds, phosphorus compounds, lead compounds, zinc compounds, and soot from combustion byproducts produced by the combustion of a hdrocarbonaceous fuel in said combustion chamber, the method comprising adding to the fuel before or during combustion an aqueous additive containing a water-soluble metal compound, whereby the metal of said metal compound reacts with at least one material selected from the group consisting of sulfur, phosphorus, lead, zinc and soot to form a particulate.

58. A method for reducing the amount of one or more of sulfur compounds, phosphorus compounds, and/or soot combustion byproducts produced from the combustion in a combustion chamber of a hydrocarbonaceous fuel, said method occurring before the combustion byproducts contact a catalytic converter, and comprising the steps: adding to the fuel before or during combustion an aqueous additive containing a water-soluble metal compound, whereby the metal of said metal compound reacts with at least one material selected from the group consisting of sulfur compounds, phosphorus compounds or soot to form a particulate.

59. A composition of matter comprising a material selected from a water-soluble metal ion source, a water-soluble metal compound, a precursor thereof, and a mixture thereof, a water-in-fuel emulsion, and optionally further comprising at least one component selected from the group consisting of di-hydrocarbyl peroxides, surfactants, dispersants, organic peroxy esters, corrosion inhibitors, antioxidants, anti-rust agents, detergents, lubricity agents, cyclopentadienyl manganese tricarbonyl compound, lubricity improvers, sodium nitrite, urea, ammonium nitrate, fuel stabilizers, and azide compounds.

60. A fuel additive comprising a metal compound, water, fuel, and urea.

61. A fuel additive comprising a metal compound, water, fuel, and ammonia.

62. A method for scavenging phosphorus from the combustion byproducts resulting from the combustion of hydrocarbonaceous fuel in a combustion chamber, said method comprising the steps of adding to the fuel before or during combustion an aqueous additive containing a water-soluble metal compound, whereby the metal of said metal compound reacts with phosphorus to form a reaction product, and removing said reaction product from said combustion byproducts.

63. A method for scavenging sulfur from the combustion byproducts resulting from the combustion of hydrocarbonaceous fuel in a combustion chamber, said method comprising the steps of adding to the fuel before or during combustion an aqueous additive containing a water-soluble metal compound, whereby the metal of said metal compound reacts with sulfur to form a reaction product, and removing said reaction product from said combustion byproducts.

64. A method for scavenging soot from the combustion byproducts resulting from the combustion of hydrocarbonaceous fuel in a combustion chamber, said method comprising the steps of adding to the fuel before or during combustion an aqueous additive containing a water-soluble metal compound, whereby the metal of said metal compound reacts with soot to form a reaction product, and removing said reaction product from said combustion byproducts.

65. A method for preventing poisoning of a catalyst in a catalytic converter receiving combustion byproducts from the combustion of hydrocarbonaceous fuel in a combustion chamber, said method comprising the steps of adding to the fuel before or during combustion an aqueous additive containing a water-soluble metal compound, whereby the metal of said metal compound reacts with at least one material selected from sulfur, phosphorus, lead, zinc and soot to thereby prevent poisoning of the catalyst by the sulfur, phosphorus, lead, zinc or soot.

66. A fuel composition comprising a major amount of a hydrocarbonaceous fuel, and a minor amount of an additive comprising the additive of claim 21.
